# EUROPEAN PATENT APPLICATION

(11) **EP 1 146 438 A2**
(43) Date of publication of application: **17.10.2001**
(21) Application number: 01480019.7
(22) Date of filing: 27.02.2001
(51) Int. Cl.: G06F 17/24, G06F 17/60

(54) **Handling absolute references in electronic spreadsheets during copy or cut and paste operation**

(30) Priority: 14.04.2000 EP 00480033
(71) Applicant: INTERNATIONAL BUSINESS MACHINES CORPORATION, Armonk, NY 10504 (US)
(72) Inventor: Bauchot, Frédéric, 06640 St Jeannet (FR); Harari, Albert, 06100 Nice (FR)
(74) Representative: Etorre, Yves Nicolas

(57) **Abstract**

The present invention relates to the field of information processing by digital computers, and more particularly to a method and system, in an electronic spreadsheet, for handling absolute cell or cell range references within formulas comprised in cells that are cut or copied and then pasted from one environment (a file for instance) into another environment.

## Description

### Technical field of the invention

The present invention relates to the field of information processing by digital computers, and more particularly to a method and system, in an electronic spreadsheet, for handling absolute references during a copy & paste operation or during a cut & paste operation.

### Background art

Before computers, numerical analyses, particularly financial ones, were usually prepared on an accountant's columnar pad or spreadsheet, with pencil and calculator in hand. By organising data into columns and rows, spreadsheets afford the rapid assimilation of information by a reader. The task of preparing a spreadsheet on paper, however, is not quite so fast. Instead, the process tends to be very slow, as each entry must be tediously calculated and entered into the spreadsheet. Since all calculations are the responsibility of the preparer, manually prepared spreadsheets are also prone to errors. Hence, preparation of spreadsheets by hand is slow, tedious, and unreliable.

With the advent of microcomputers, a solution was forthcoming in the form of "electronic spreadsheets." Better known simply as "spreadsheets," these software programs provide a computerised replacement for the traditional financial modelling tools: the accountant's columnar pad, pencil, and calculator. In some regards, spreadsheet programs are to those tools what word processors are to typewriters. Spreadsheets offer dramatic improvements in ease of creating, editing, and using financial models.

A typical spreadsheet program configures the memory of a computer to resemble the column/row or grid format of an accountant's columnar pad, thus providing a visible calculator for a user. Because this "pad" exists dynamically in the computer's memory, however, it differs from paper pads in several important ways. Locations in the electronic spreadsheet, for example, must be communicated to the computer in a format which it can understand. A common scheme for accomplishing this is to assign a number to each row in a spreadsheet, a letter to each column, and another letter to each sheet (or page) of the spreadsheet. To reference a location at column A and row 1 of the second page (i.e., the upper-left hand corner), for example, the user types in "B:A1". In this manner, the spreadsheet defines an addressable storage location or "cell" at each intersection of a row with a column within a given page.

Data entry into an electronic spreadsheet occurs in much the same manner that information would be entered on an accountant's pad. After a screen cursor is positioned at a desired location, the user can enter alphanumeric information. Besides holding text and numeric information, however, spreadsheet cells can store special instructions or "formulas" specifying calculations to be performed on the numbers stored in spreadsheet cells. Such spreadsheet cells can also be defined and named as a range as long as they are arranged as a connex set of cells. A typical example of such a named range simply corresponds to a regular table found in an accountant's pad. In this fashion, range names can serve as variables in an equation, thereby allowing precise mathematical relationships to be defined between cells. The structure and operation of a spreadsheet program, including advanced functions such as functions and macros, are documented in the technical, trade, and patent literature.

Electronic spreadsheets offer many advantages over their paper counterparts. For one, electronic spreadsheets are much larger (i.e., hold more information) than their paper counterparts; electronic spreadsheets having thousands or even millions of cells are not uncommon. Spreadsheet programs also allow users to perform "what-if" scenarios. After a set of computational relationships has been entered into a worksheet, thanks to imbedded formulas for instance, the spread of information can be recalculated using different sets of assumptions, with the results of each recalculation appearing almost instantaneously. Performing this operation manually, with paper and pencil, would require recalculating every relationship in the model with each change made. Thus, electronic spreadsheet systems were invented to solve "what-if' problems, that is, changing an input and seeing what happens to an output.

Cell ranges are used to automate the computations in a spreadsheet. Whether cells or cell ranges are named or not, they can be referenced within a formula either by a "relative" or an "absolute" reference. Such a reference can be the address of the referenced cell (or cell range), or the name of the cell (or cell range) if it turns that this cell (or cell range) is named.
- With a relative reference, the cell (or cell range) is determined from the position (relative address) of the cell hosting the reference.
- With an absolute reference, the cell (or cell range) is determined from its absolute position (absolute address) within the spreadsheet.
When a cell comprising a formula with one or a plurality of relative and/or absolute cell (or cell range) references, is first cut or copied and then pasted into another cell address, the content of the cut or copied cell (also called source cell) is transferred to the pasted cell (also called destination cell) with the one or the plurality of relative and/or absolute cell (or cell range) references. The relative references point to cells (or cell ranges) determined from the position of the pasted cell, while the absolute references point to the same locations as the ones pointed by the absolute references in the source cell. Such locations can be:
- either within the source environment (as implemented by the Lotus Corp. tool 123), or
- within the destination environment (as implemented by the Microsoft Corp. tool Excel).
When such an absolute cell (or cell range) reference is no longer visible from the pasted cell (for instance because the absolute cell (or cell range) reference and the pasted cell belong to different files and the file hosting the referenced cell (or cell range) is closed), then the formula results into an error in the first case. When an absolute cell (or cell range) reference does not comprise the same information in the source environment and in the destination environment, the value taken by the formula in the pasted cell has a high probability to be wrong. The only way to avoid such errors with conventional means would be to do a paste "by value" operation where formulas are replaced by the value they take. However, this operation is detrimental because it leads to a loss of dynamicity and flexibility.

### Summary of the invention

The present invention relates to the field of information processing by digital computers, and more particularly to a method and system, in an electronic spreadsheet, for handling absolute cell or cell range references within formulas comprised in cells that are cut or copied and then pasted from one environment (a file for instance) into another environment. The method of processing one or a plurality of absolute cell references or cell range references during a copy/cut and paste operation in a multi dimensional spreadsheet comprising a plurality of cells identified by addresses or names, comprises the steps of:
- performing a "regular" cut or copy operation, said operation comprising the steps of:
   - selecting a source cell range to cut and paste or to copy and paste into a destination cell range;
   - storing in a working buffer the content of each cell that belongs to said source cell range;
   - clearing the content of each cell that belongs to a source cell range to cut;
- performing a so-called "self-contained paste" operation, said operation comprising for each cell stored in the working buffer, the further steps of:
   - if the content of the stored cell comprises one or a plurality of absolute references pointing to a cell or a cell range belonging to the source cell range:
      - determining for each of said cells or cell ranges pointed by an absolute reference and belonging to the source cell range, a relative position within the source cell range;
      - determining for each of said relative position within the source cell range, a corresponding absolute reference within the destination cell range;
      - replacing within the stored cell, each absolute reference pointing to a cell or a cell range belonging to the source cell range by the corresponding absolute reference within the destination cell range;
   - copying the content of each cell stored in the buffer to corresponding cells within the destination cell range.

### Brief description of the drawings

The novel and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein :
- Figure **1A** is a schematic view of a computer system in which the present invention may be embodied.
- Figure **1B** is a schematic view a software system including an operating system, an application software, and a user interface for carrying out the present invention.
- Figure **1C** illustrates the basic architecture and functionality of a graphical user interface in which the present invention may be embodied.
- Figure **2A** shows a spreadsheet notebook interface according to the preferred embodiment of the present invention.
- Figure **2B** shows the toolbar component of the notebook interface shown in Figure **2A.**
- Figures **2C** and **2D** show page identifiers for rapidly accessing and manipulating individual pages of the notebook interface shown in Figure **2A.**
- Figure **3** illustrates a typical spreadsheet structure used in the preferred embodiment of the present invention.
- Figure **4** is a flow chart illustrating a preferred method for handling absolute references during a paste operation according to the present invention.

### Detailed description of the preferred embodiment

### SYSTEM HARDWARE

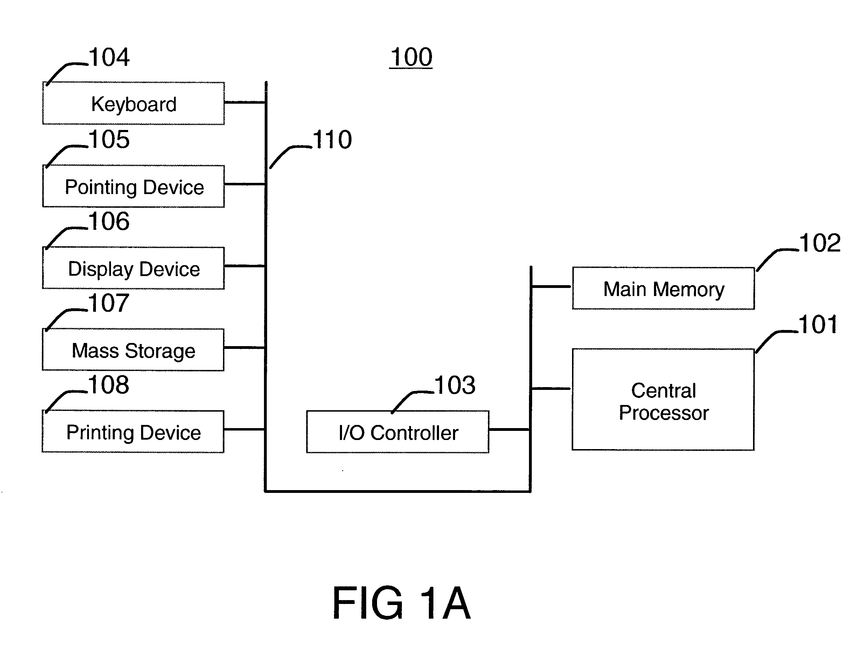

As shown in FIG. **1A,** the present invention may be embodied on a computer system **100** comprising a central processor **101,** a main memory **102,** an input/output controller **103,** a keyboard **104,** a pointing device **105** (e.g., mouse, track ball, pen device, or the like), a display device **106,** and a mass storage **107** (e.g., hard disk). Additional input/output devices, such as a printing device **108,** may be included in the system **100** as desired. As illustrated, the various components of the system **100** communicate through a system bus **110** or similar architecture. In a preferred embodiment, the computer system **100** includes an IBM-compatible personal computer, which is available from several vendors (including International Business Machine - IBM Corporation of Armonk, N.Y.).

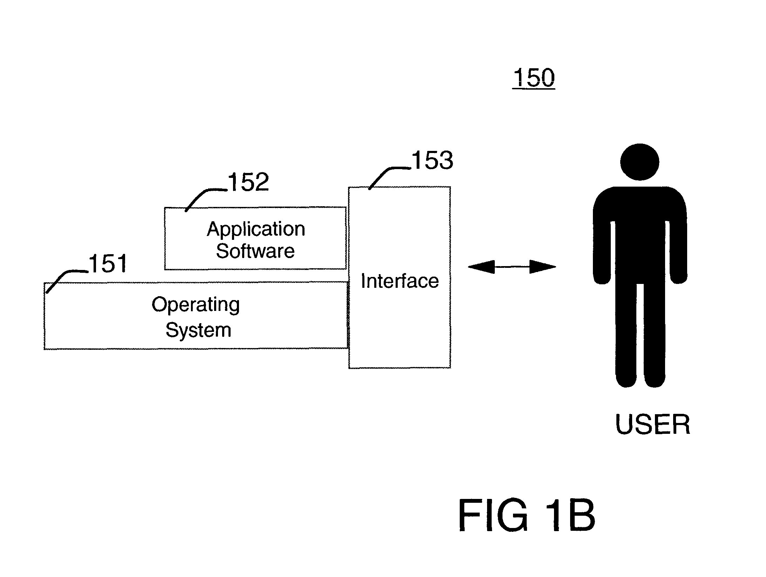

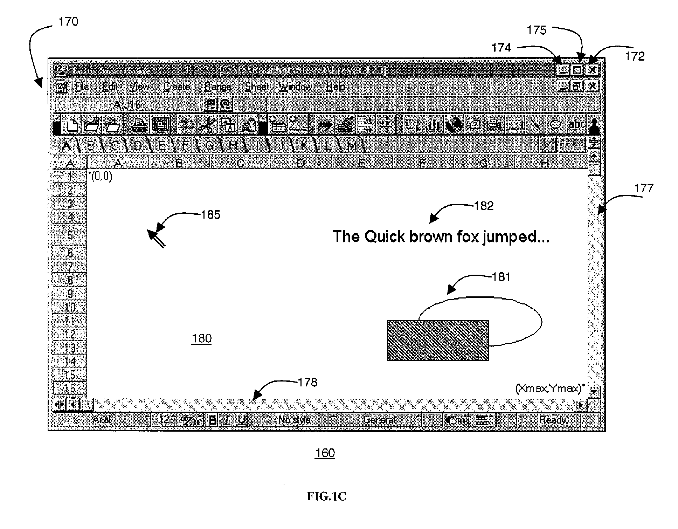

Illustrated in FIG. **1B,** a computer software system **150** is provided for directing the operation of the computer system **100.** Software system **150,** which is stored in system memory **102** and on disk memory **107,** includes a kernel or operating system **151** and a shell or interface **153.** One or more application programs, such as application software **152,** may be "loaded' (i.e., transferred from storage **107** into memory **102)** for execution by the system **100.** The system **100** receives user commands and data through user interface **153;** these inputs may then be acted upon by the system **100** in accordance with instructions from operating module **151** and/or application module **152.** The interface **153,** which is preferably a graphical user interface (GUI), also serves to display results, whereupon the user may supply additional inputs or terminate the session. In a preferred embodiment, operating system **151** and interface **153** are Microsoft Win95, available from Microsoft Corporation of Redmond, Wash. Application module **152,** on the other hand, includes a spreadsheet notebook of the present invention as described in further detail herein below.

### INTERFACE

### A. Introduction

The following description will focus on the presently preferred embodiments of the present invention, which are embodied in spreadsheet applications operative in the Microsoft Win95 environment. The present invention, however, is not limited to any particular application or any particular environment. Instead, those skilled in the art will find that the system and methods of the present invention may be advantageously applied to a variety of system and application software, including database management systems, word processors, and the like. Moreover, the present invention may be embodied on a variety of different platforms, including Macintosh, UNIX, NextStep, and the like. Therefore, the description of the exemplary embodiments which follows is for purposes of illustration and not limitation.

Referring now to FIG. **1C,** the system **100** includes a windowing interface or workspace **160.** Window **160** is a rectangular, graphical user interface (GUI) for display on screen **106;** additional windowing elements may be displayed in various sizes and formats (e.g., tiled or cascaded), as desired. At the top of window **160** is a menu bar **170** with a plurality of user-command choices, each of which may invoke additional submenus and software tools for use with application objects. Window **160** includes a client area **180** for displaying and manipulating screen objects, such as graphic object **181** and text object **182.** In essence, the client area is a workspace or viewport for the user to interact with data objects which reside within the computer system **100.**

Windowing interface **160** includes a screen cursor or pointer **185** for selecting and otherwise invoking screen objects of interest. In response to user movement signals from the pointing device **105,** the cursor **185** floats (i.e., freely moves) across the screen **106** to a desired screen location. During or after cursor movement, the user may generate user-event signals (e.g., mouse button "clicks" and "drags") for selecting and manipulating objects, as is known in the art. For example, Window **160** may be closed, re-sized, or scrolled by "clicking" (selecting) screen components **172, 174/5,** and **177/8,** respectively.

In a preferred embodiment, screen cursor **185** is controlled with a mouse device. Single-button, double-button, or triple-button mouse devices are available from a variety of vendors, including Apple Computer of Cupertino, Calif., Microsoft Corporation of Redmond, Wash., and Logitech Corporation of Fremont, Calif., respectively. More preferably, screen cursor control device **105** is a two-button mouse device, including both right and left "mouse buttons."

Programming techniques and operations for mouse devices are well documented in the programming and hardware literature; see e.g., *Microsoft Mouse Programmer's Reference,* Microsoft Press, 1989. The general construction and operation of a GUI event-driven system, such as Windows, is also known in the art: see, e.g., Petzold, C., *Programming Windows,* Second Edition, Microsoft Press, 1990. The disclosures of each are hereby incorporated by reference.

### B. Preferred interface

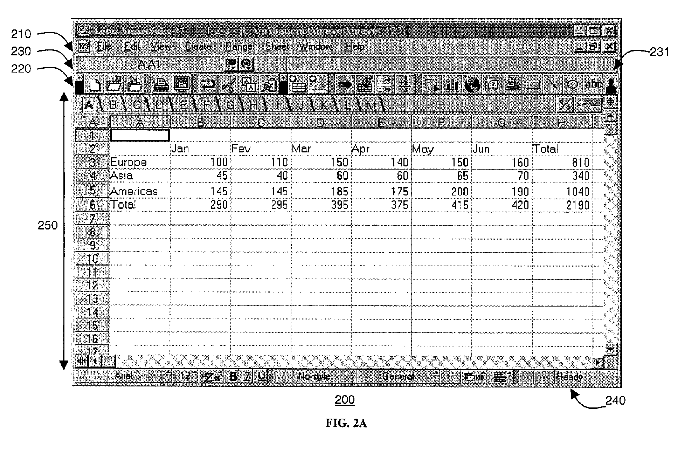

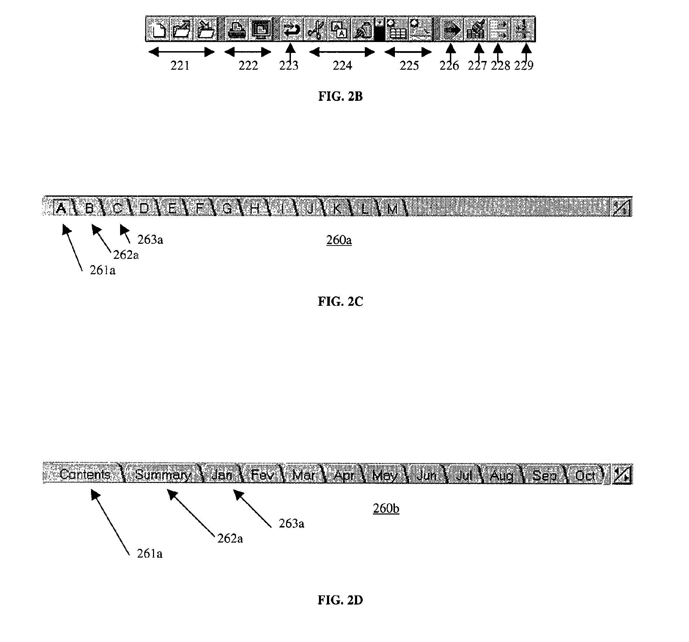

Shown in FIG. 2**A,** a spreadsheet notebook interface of the present invention will now be described The spreadsheet notebook or workbook of the present invention includes a notebook workspace **200** for receiving, processing, and presenting information, including alphanumeric as well as graphic information. Notebook workspace **200** includes a menu bar **210,** a toolbar **220,** a current cell indicator **230,** an input line **231,** a status line **240,** and a notebook window **250.** The menu bar **210** displays and invokes, in response to user inputs, a main level of user commands. Menu **210** also invokes additional pull down menus, as is known in windowing applications. Input line **231** accepts user commands and information for the entry and editing of cell contents, which may include data, formulas, macros, and the like. Indicator **230** displays an address for the current cursor (i.e., active cell) position, or the address or name of a selected named range (i.e. active selection). At the status line **240,** system **100** displays information about the current state of the workbook; for example, a "READY" indicator means that the system is ready for the user to select another task to be performed.

The toolbar **220,** shown in further detail in FIG. 2**B,** comprises a row or palette of tools which provide a quick way for the user to choose commonly-used menu commands or properties. In an exemplary embodiment, toolbar **220** includes file manipulation buttons **221,** printing buttons **222,** an undo button **223,** cut, copy, and paste buttons **224,** information pop-up window buttons tool **225,** a named range selection button **226,** a style copy button **227,** a column re-sizing button **228,** and a sum button **229.** The functions of these buttons are suggested by their names. For instance, buttons **224** cut, copy and paste data and objects to and from Windows' clipboard. The same actions are also available as corresponding commands in the Edit menu (available from menu bar **210).**

The notebook, which provides an interface for entering and displaying information of interest, includes a plurality of spreadsheet pages. Each page may include conventional windowing features and operations, such as moving, re-sizing, and deleting. In a preferred embodiment, the notebook includes 256 spreadsheet pages, all of which are saved as a single disk file on the mass storage **107.** Workspace **200** may display one or more notebooks, each sized and positioned (e.g., tiled, overlapping, and the like) according to user-specified constraints.

Each spreadsheet page of a notebook includes a 2-D spread. Page A from the notebook **200,** for example, includes a grid in row and column format, such as row 3 and column F. At each row/column intersection, a box or cell (e.g., cell **C4)** is provided for entering, processing, and displaying information in a conventional manner. Each cell is addressable, with a selector being provided for indicating a currently active one (i.e., the cell that is currently selected).

As shown in FIGS. **2C-D,** individual notebook pages are identified by page identifiers **260,** preferably located along one edge of a notebook. In a preferred embodiment, each page identifier is in the form of a tab member (e.g., members **261a, 262a, 263a)** situated along a top edge of the notebook. Each tab member may include representative indicia, such as textual or graphic labels, including user selected titles representing the contents of a corresponding page. In FIG. **2C,** the tab members **260** are set to their respective default names. For example, the first three tab members (members **261a, 262a, 263a)** are respectively set to A, B, and C. Tab members are typically given descriptive names provided by the user, however. As shown in FIG. **2D,** for example, the first three tab members have now been set to "Contents" (tab member **261b),** "Summary" (tab member **262b),** and "Jan" (tab member **263b).** In a similar manner, the remaining tabs are set to subsequent months of the year. In this manner, the user associates the page identifiers with familiar tabs from an ordinary paper notebook. Thus, the user already knows how to select a page or spread of interest: simply select the tab corresponding to the page (as one would do when selecting a page from a paper notebook).

In addition to aiding in the selection of an appropriate page of information, the user-customizable page identifiers serve aid in the entry of spreadsheet named range addresses. For example, when entering a formula referring to a named range of cells on another page, the user may simply use the descriptive page name in the named range address, thus making it easier for the user to understand the relationship of the cell(s) or information being referenced.

A general description of the features and operation of the spreadsheet notebook interface may be found in Quattro Pro for Windows *(Getting Started, User's Guide and Building Spreadsheet Applications),* available from Borland International.

### MANAGEMENT OF ABSOLUTE REFERENCES DURING A PASTE OPERATION

### A. Introduction

Cell ranges are used to automate the computations in a spreadsheet. Cell or cell ranges can be referenced within a formula either by a "relative" or an "absolute" cell or cell range reference. Such a cell (or cell range) reference can be the address of the referenced cell (or cell range), or the name of the referenced cell (or cell range) if it turns that this cell (or cell range) is named. In the following, for more readability, we will assume that the reference is the cell (or cell range) address, but the same results would be achieved by using the cell (or cell range) name instead.

### • Relative references

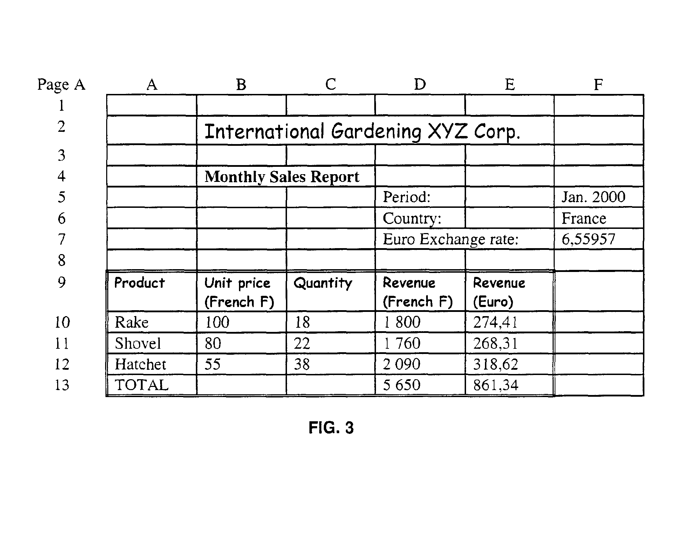

When using relative references in a formula comprised within a given cell, the cell (or cell range) is identified by its relative position to the given cell. For instance let consider the cell with address "A:D10". If this cell contains the formula "A:B10*A:C10", it means that the value of this cell will be the result of the multiplication of the two cells located immediately on his left (columns B and C), on the same row (row 10), within the same page (page A). The use of such relative references is quite powerful for building some structured table because the same relationship can be established across table elements. With the same example as above, if the cell at address "A:D10" is copied on the cell below it (whose address is "A:D11"), it will hold the formula "A:B11*A:C11" just because it corresponds also to the result of the multiplication of the two cells located on the same row (11), on the same page (A), and on the immediately left columns (B and C). For instance within a structured Country Sales Report Table, as illustrated in FIG. **3**,
- column A is filled with the names of sold products,
- column B is filled with the unit price (in local currency) of the products,
- column C is filled with the quantity of sold products and
- column D gives, thanks to the above formula, the revenue for the sold products (in local currency).

### • Absolute references

When using absolute references in a formula contained within a given cell, the referenced cell (or cell range) is identified by its position within the entire spreadsheet. For instance let consider in the above example illustrated in FIG. **3**, the cell with address "A:E10": This cell belongs to the column filled with the revenue of the sold products, using the Euro currency. If this cell contains the formula "A:D10/$A:$F$7", it means that the value of this cell will be the result of the division of the cell located immediately on his left (column D), on the same row (row 10), within the same page (page A), by the cell located on row 7, column F, page A, and which holds the French Franc to Euro exchange rate. The presence of the dollar sign ("$") is a classical naming convention telling that the address of the cell "A:F7" is used as an absolute reference. Combining such relative and absolute references is even more powerful for building some structured table because the same relationship can be established across table elements. With the same example as above, if the cell at address "A:E10" is copied on the cell just below it (whose address is "A:E11"), it will hold the formula "A:D11/$A:$F$7" just because it corresponds also to the result of the division of the cell located on the same row (11), on the same page (A), and on the immediately left column (D) by the cell on row 7, column F, page A. As the cell at address A:F7 was referenced by an absolute reference ("$A:$F$7") in the cell "A:E10", it is also referenced by an absolute reference within the formula of the cell "A:E11".

Let now assume that the user of the previously introduced spreadsheets wishes to consolidate different monthly sales reports coming from different countries, each of them being structured according to the above format. A straightforward approach would be to create a consolidation spreadsheet on which will be copied/pasted each of the country sales reports (for instance the range "A:A4..A:F13"). When such an operation is performed, conventional electronic spreadsheets offer the possibility to copy/paste the content of cells (that is the default mode where formulas are copied as described above), or the value of cells (in this case the value taken by a formula replaces the formula itself). In the scenario dealing with monthly sales reports consolidation, none of these two methods is satisfactory for the following reasons:
- **1.** When the content of cells is copied/pasted, any absolute reference is kept unchanged, meaning that it points within the destination cell range to the same cell as the one pointed in the original source range. This has been implemented in two flavours by products like 123 from Lotus Corp. or Excel from Microsoft Corp., depending on the environment (source or destination) the cell range belongs to. If, in the consolidation file, the cell corresponding to the copy of the cell whose address is "A:E10" in the source file (with assumed file name "France Report Jan 2000.xyz"), is located at address "C:E133". The formula found at this address will be, with classical naming conventions:
   - "C:D133/<<France Report Jan 2000.xyz>>$A:$E$7" when the spreadsheet is operated by the tool 123, and
   - "C:D133/$A:$E$7" when the spreadsheet is operated by the tool Excel.
   As soon as the original source range becomes no longer visible to the destination one (for instance when the file holding the France sales report is closed), then the referenced range cannot be resolved in the 123 tool case, resulting in an error. In this case the formula is still "C:D133//<< France Report Jan 2000.xyz>>$A:$E$7" but the value of the cell becomes "ERR". In the Excel case, the cell with address "A:E7" in the consolidation file does not necessary carry the same information (French Franc to Euro exchange rate) as in the original file. For instance if this cell is zeroed, then the formula will also display "ERR" (divide by zero), or even worse, if this cell carries any valid number, then the formula provides an erroneous result, without showing any error.
- 2. When the value of cells is copied/pasted by value, then the formulas are all replaced by their respective values, meaning that the power brought by automatic computation is lost. This is very detrimental because one of the main reasons to use automatic spreadsheets is to take advantage of the automation means offered by imbedded formulas.

The present invention offer a user-friendly solution to this problem for all the absolute references which are part of the pasted range. Indeed in such a case, the information carried by such cells are pasted in the destination environment, so that it is possible to rely on them safely.

### B. Scenario

In contrast to just-described conventional tools, the present invention provides a more powerful, user-friendly and interactive approach for handling absolute references during a cut/copy and paste operation, in a form of a so-called "Self-Contained Paste" method.

In a preferred embodiment, the present invention is used in two steps :
- **1. The first step** occurs when the spreadsheet user decides, based on some criteria not detailed here, whether a given range of cells have to be cut or copied to memory (the underlying memory space being known as the clipboard).
   - The user first selects the relevant range of cells by using the pointing device **105** or the keyboard **104** and then invokes the conventional commands called ***"Copy"*** or ***"Cut"*** thanks to conventional means available in spreadsheet environment, such as (but not limited to) dedicated push-buttons, keyboard entry short cuts, menu or sub-menu entries.
   - At completion of one of these two conventional commands, the selected range of cells has been copied by conventional internal routines of spreadsheet program into the memory **102** of the computer system.
- **2. The second step** occurs when the spreadsheet user decides, based on his or her own criteria not detailed here, to take advantage of the present invention by invoking an original command ***"Self-Contained Paste"*** thanks to conventional means available in spreadsheet environment, such as (but not limited to) dedicated push-buttons, keyboard entry short cuts, menu or sub-menu entries.

### C. Self-Contained_Paste method

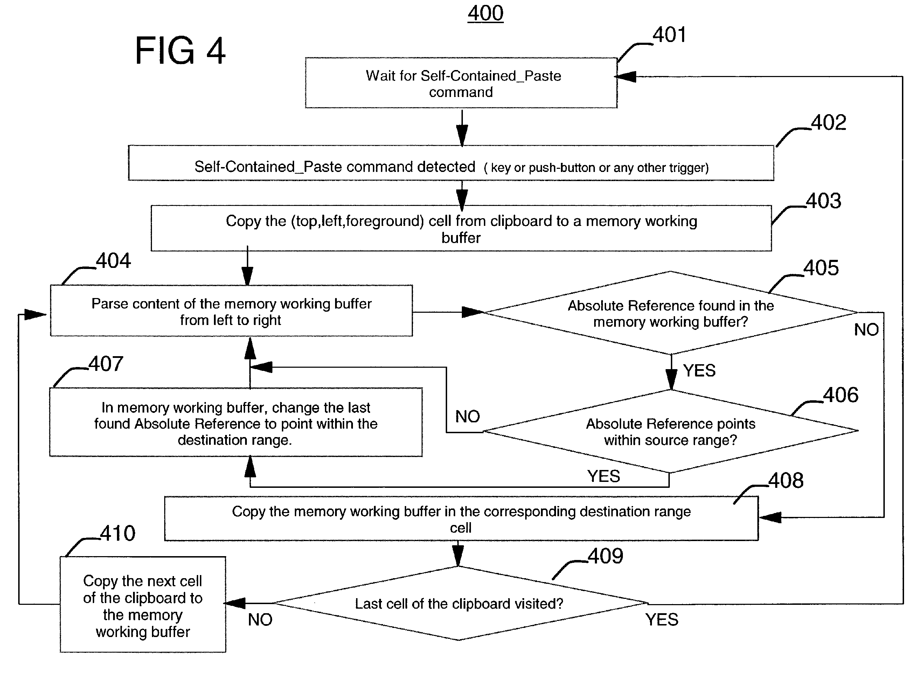

The method for handling absolute references during a paste operation to take advantage of the present invention is summarised in flowchart **400** of FIG **4.** This method can be seen as the processing of the *"Self-Contained Paste"* command. The method comprises the following steps :
- At step **401,** the method is in its default state, waiting for an event to initiate the process.
- At step **402,** an event is detected, as a result of an user action. This action can be for instance a specific combination of key on the keyboard **104,** or the click of the pointing device **105** on a specific button, or any other similar means not further specified here.
- At step **403,** the first cell found in memory clipboard (typically corresponding to the top, left foreground cell) is copied within a working buffer in memory. subsequent operations performed on the content of the cell will be done within this buffer.
- At step **404,** the content of the memory working buffer is parsed from left to right, by using conventional parsing methods not detailed here.
- At step **405,** a test is performed to detect, while parsing, if any absolute reference is found within the content of the memory working buffer. If it is the case, then control is given to step **406,** otherwise control is given to step **408.**
- At step **406,** a test is performed on the absolute reference found at step **405** to determine if this reference points to a cell which is part of the whole source cell range, that is the cell range which has been cut or copied to the clipboard. If it is the case, then control is given to step **407,** otherwise control is given to step **404** for further parsing from left to right the rest of the content of the memory working buffer.
- At step **407,** the content of the memory working buffer is updated to change the absolute reference identified at steps **405** and **406,** so that it points within the pasted range to the cell whose relative position within this pasted range matches the relative position of the original absolute reference within the source cell range.
- When step **408** is reached, the whole content of the memory working buffer has been parsed (step **404)** and all potential absolute references pointing within the source cell range have been updated (steps **405, 406** and **407).** It is time now to copy the content of the memory working buffer within the destination cell range (i.e. the pasted cell range) at the cell location matching the relative position of the last cell copied from the clipboard to the memory working buffer. This memory to pasted cell range relative position matching is implementation dependent and can rely on conventional techniques and classical means not detailed here.
- At step **409,** a test is performed to check if the last cell of the clipboard has been treated according to the previous steps **(404** to **408** included). This test implicitly assumes that the clipboard cells are ordered, and the present invention does not make any assumption on the way this ordering is implemented. If the last cell has been visited, then it means that all the cells have been treated, so that control can be given back to the initial step **401,** for processing any further new command. If it is not the case, then control is given to step **410.**
- At step **410,** the next cell found in the clipboard is copied onto the memory working buffer for being treated according to the logic described in steps **404** to **409.** The determination of the next cell relies here also on some cell ordering method on which the present invention does not make any assumption.

### ALTERNATE EMBODIMENTS

While the invention has been particularly shown and described with reference to a preferred embodiment, it will be understood that various changes in form and detail may be made therein without departing from the spirit, and scope of the invention.

The Self-Contained_Paste method and system according to the present invention may be used advantageously in those environments where elements of information are organised as multidimensional tables having more than three dimensions.

## Claims

1. Method for processing one or a plurality of absolute cell references or cell range references during a copy/cut and paste operation in a multi dimensional spreadsheet (170) comprising a plurality of cells identified by addresses or names, said method comprising the steps of:
• selecting a source cell range to cut and paste or to copy and paste into a destination cell range;
• storing (403) in a working buffer the content of each cell that belongs to said source cell range;
• clearing the content of each cell that belongs to a source cell range to cut;
for each cell stored in the working buffer:
• if the content of the stored cell comprises one or a plurality of absolute references pointing to a cell or a cell range belonging to the source cell range (405, 406):
• determining for each of said cells or cell ranges pointed by an absolute reference and belonging to the source cell range, a relative position within the source cell range;
• determining for each of said relative position within the source cell range, a corresponding absolute reference within the destination cell range;
• replacing (407) within the stored cell, each absolute reference pointing to a cell or a cell range belonging to the source cell range by the corresponding absolute reference within the destination cell range;
• copying (408) the content of each cell stored in the buffer to corresponding cells within the destination cell range.

2. A system comprising means adapted for carrying out the method according to the preceding claim.

3. A computer readable medium comprising instructions adapted for carrying out the method according to claim 1.
